# EUROPÄISCHE PATENTSCHRIFT

(11) **EP 3 719 986 B1**
(45) Veröffentlichungstag und Bekanntmachung des Hinweises auf die Patenterteilung: **11.08.2021**
(21) Anmeldenummer: 19166799.7
(22) Anmeldetag: 02.04.2019
(51) Int. Cl.: H02M 7/483

(54) **UMRICHTER, ANORDNUNG MIT EINEM UMRICHTER UND VERFAHREN ZU DEREN BETRIEB**
INVERTER, ASSEMBLY WITH AN INVERTER AND METHOD FOR OPERATING THE SAME
CONVERTISSEUR, DISPOSITIF DOTÉ D'UN CONVERTISSEUR ET SON PROCÉDÉ DE FONCTIONNEMENT

(43) Veröffentlichungstag der Anmeldung: 07.10.2020
(73) Patentinhaber: Siemens Energy Global GmbH & Co. KG, 81739 München (DE)
(72) Erfinder: Pieschel, Martin, 90473 Nürnberg (DE); Schuster, Dominik, 91456 Diespeck (DE)

(56) Entgegenhaltungen:
- EP-A1- 2 815 913
- WO-A2-2012/152619
- WO-A2-2013/120675
- US-A1- 2018 091 037

## Beschreibung

Die Erfindung bezieht sich auf Umrichter, Anordnungen mit Umrichter(n) und Verfahren zu deren Betrieb.

Die vorliegende Erfindung bezieht sich unter anderem auf einen Umrichter mit einem Teilkonverter, der aufweist: teilkonvertereigene Einspeisedrehstromanschlüsse zum Anschluss an ein einspeisendes elektrisches Drehstromsystem sowie teilkonvertereigene Ausgabedrehstromanschlüsse, die ein teilkonvertereigenes Ausgabedrehstromsystem bilden, und einen teilkonvertereigenen Sternpunktanschluss zum Kontaktieren eines Sternpunkts des teilkonvertereigenen Ausgabedrehstromsystems.

Umrichter mit Teilkonverter der beschriebenen Art und somit auch die Teilkonverter als solche sind allgemein bekannt und werden zum Beispiel von der Siemens AG unter der Produktbezeichnung Sinamics Perfect Harmony GH 180 angeboten und vertrieben.

Aus der EP 2 815 913 A1 ist ein Ladesystem für elektrische Fahrzeuge bekannt, bei dem Reihenschaltungen von Submodulen parallelgeschaltet sind, um eine AC-DC-AC-Umwandlung zu ermöglichen.

Die WO 2013/120675 A2 offenbart einen modularen Mehrstufenumrichter, bei dem an den Kondensator mindestens eines Submoduls über jeweils einen Wechselrichter mit nachgeordnetem Transformator der mindestens eine elektrische Verbraucher oder elektrische Energieerzeuger angeschlossen ist.

Ein weiterer modularer Mehrstufenumrichter mit angeschlossenen Energiespeichern ist aus der WO 2012/152619 A2 bekannt. Der Erfindung liegt die Aufgabe zugrunde, einen Umrichter der beschriebenen Art weiter zu verbessern.

Diese Aufgabe wird erfindungsgemäß durch einen Umrichter mit den Merkmalen gemäß Patentanspruch 1 gelöst. Vorteilhafte Ausgestaltungen des erfindungsgemäßen Umrichters sind in Unteransprüchen angegeben.

Danach ist erfindungsgemäß vorgesehen, dass der Umrichter zumindest einen weiteren Teilkonverter umfasst, der teilkonvertereigene Einspeisedrehstromanschlüsse, teilkonvertereigene Ausgabedrehstromanschlüsse, die ein teilkonvertereigenes Ausgabedrehstromsystem bilden, und einen teilkonvertereigenen Sternpunktanschluss zum Kontaktieren eines Sternpunkts des teilkonvertereigenen Ausgabedrehstromsystems aufweist, die Teilkonverter bezüglich ihrer teilkonvertereigenen Einspeisedrehstromanschlüsse parallelgeschaltet sind und die parallelgeschalteten teilkonvertereigenen Einspeisedrehstromanschlüsse umrichtereigene Einspeisedrehstromanschlüsse zum Anschluss an ein und dasselbe speisende Drehstromsystem bilden, und die Teilkonverter bezüglich ihrer teilkonvertereigenen Ausgabedrehstromanschlüsse parallelgeschaltet sind.

Ein wesentlicher Vorteil des erfindungsgemäßen Umrichters besteht darin, dass dieser bei geeigneter Ansteuerung des Umrichters bzw. der Teilkonverter an den Sternpunktanschlüssen wahlweise eine Gleichspannung oder eine Wechselspannung beliebiger Frequenz erzeugen und einen entsprechenden Gleich- oder Wechselstrom ausgeben kann.

Ein weiterer Vorteil des erfindungsgemäßen Umrichters besteht darin, dass bei entsprechender äußerer Beschaltung der parallelgeschalteten teilkonvertereigenen Ausgabedrehstromanschlüsse darüber hinaus ausgangsseitig zusätzlich auch ein Drehstrom ausgegeben werden kann.

Ein zusätzlicher Vorteil des erfindungsgemäßen Umrichters besteht darin, dass die Teilkonverter ohne eine gemeinsame Zwischenkreisgleichspannung auskommen können.

Erfindungsgemäß weisen der eine und der weitere Teilkonverter jeweils pro teilkonvertereigenem Einspeisedrehstromanschluss jeweils ein Konvertermodul auf.

Jedes der Konvertermodule weist jeweils einen modulseitigen Einspeisedrehstromanschluss, einen modulseitigen Neutralleiteranschluss, einen modulseitigen Ausgabedrehstromanschluss und einen modulseitigen Sternpunktanschluss auf.

Die modulseitigen Neutralleiteranschlüsse der Konvertermodule sind miteinander verbunden und bilden einen teilkonvertereigenen Neutralleiteranschluss des jeweiligen Teilkonverters.

Die modulseitigen Sternpunktanschlüsse der Konvertermodule sind miteinander verbunden und bilden den teilkonvertereigenen Sternpunktanschluss des jeweiligen Teilkonverters.

Die modulseitigen Einspeisedrehstromanschlüsse bilden jeweils einen der teilkonvertereigenen Einspeisedrehstromanschlüsse des jeweiligen Teilkonverters.

Die modulseitigen Ausgabedrehstromanschlüsse bilden jeweils einen der teilkonvertereigenen Ausgabedrehstromanschlüsse des jeweiligen Teilkonverters.

Die Konvertermodule weisen jeweils zwei oder mehr elektrisch in Reihe geschaltete Submodule, einen Transformator mit einer Primärwicklung und pro Submodul jeweils einer Sekundärwicklung auf.

Jedes der Submodule ist eingangsseitig jeweils individuell mit einer der Sekundärwicklungen des Transformators verbunden.

Einer der Anschlüsse der Primärwicklung des Transformators bildet einen modulseitigen Einspeisedrehstromanschluss und ein anderer Anschluss der Primärwicklung des Transformators einen modulseitigen Neutralleiteranschluss.

Die Submodule weisen vorzugsweise jeweils ein Gleichrichtermodul, das mit einer dem Submodul zugeordneten Sekundärwicklung des Transformators verbunden ist, ein dem Gleichrichtermodul nachgeordnetes Kondensatormodul und ein dem Kondensatormodul nachgeordnetes Wechselrichtermodul auf.

Die elektrische Reihenschaltung der Submodule beruht vorzugsweise auf der kaskadierten Verschaltung der Wechselspannungsanschlüsse der Wechselrichtermodule.

Die Erfindung bezieht sich außerdem auf eine Umrichteranordnung mit zumindest einem Umrichter wie oben beschrieben.

Vorteilhaft ist es, wenn bei der Umrichteranordnung die parallelgeschalteten teilkonvertereigenen Ausgabedrehstromanschlüsse von außen (extern) zugängliche umrichtereigene Ausgabedrehstromanschlüsse bilden.

An die umrichtereigenen Ausgabedrehstromanschlüsse ist vorzugsweise die Primärseite eines Drei-Auf-Zwei-Einphasentransformators angeschlossen.

Auch ist es vorteilhaft, wenn - alternativ oder zusätzlich - die umrichtereigenen Ausgabedrehstromanschlüsse an die Primärseite eines Transformators angeschlossen sind, der dazu geeignet ist, auf seiner Sekundärseite zwei Wechselspannungen mit einem Phasenversatz von 90 Grad auszugeben.

Zwischen dem teilkonvertereigenen Sternpunktanschluss des einen Teilkonverters und dem teilkonvertereigenen Sternpunktanschluss des zumindest einen weiteren Teilkonverters ist vorzugsweise ein elektrischer Speicher und/oder ein elektrischer Verbraucher, insbesondere ein elektrischer Widerstand, angeschlossen.

Auch ist es vorteilhaft, wenn die Umrichteranordnung einen Generator, insbesondere eine Asynchronmaschine, umfasst, die zumindest zwei generatorseitige Ausgangsdrehstromsysteme zur Verfügung stellt, eines der generatorseitigen Ausgangsdrehstromsysteme mit den umrichtereigenen Einspeisedrehstromanschlüssen verbunden ist und ein anderes generatorseitiges Ausgangsdrehstromsystem mit den umrichtereigenen Ausgabedrehstromanschlüssen verbunden ist.

Bei einer alternativen, ebenfalls als vorteilhaft angesehenen Ausführungsvariante ist vorgesehen, dass die parallelgeschalten teilkonvertereigenen Ausgabedrehstromanschlüsse interne umrichtereigene Ausgabedrehstromanschlüsse bilden und jeder der umrichtereigenen Einspeisedrehstromanschlüsse jeweils mit einem der internen umrichtereigenen Ausgabedrehstromanschlüsse elektrisch verbunden ist.

Die Erfindung bezieht sich außerdem auf ein Verfahren zum Betreiben eines Umrichters, wie er oben beschrieben worden ist. Erfindungsgemäß ist vorgesehen, dass mit einem an die umrichtereigenen Einspeisedrehstromanschlüsse angeschlossenen Einspeisedrehstromsystem ein Drehstrom in den Umrichter eingespeist wird und Submodule in den Teilkonvertern des Umrichters derart angesteuert werden, dass an den die parallelgeschalteten teilkonvertereigenen Ausgabedrehstromanschlüssen ein Ausgabedrehstrom zur Verfügung steht und/oder zwischen den teilkonvertereigenen Sternpunktanschlüssen eine Gleichspannung oder eine einphasige Wechselspannung erzeugt wird.

Die Erfindung wird nachfolgend anhand von Ausführungsbeispielen näher erläutert; dabei zeigen beispielhaft
- Figur 1: ein Ausführungsbeispiel für eine erfindungsgemäße Umrichteranordnung mit einem Ausführungsbeispiel für einen erfindungsgemäßen Umrichter,
- Figur 2: den Umrichter gemäß Figur 1 näher im Detail,
- Figur 3: ein Ausführungsbeispiel für einen Teilkonverter,
- Figur 4: ein Ausführungsbeispiel für ein Konvertermodul,
- Figur 5: ein Ausführungsbeispiel für ein Submodul,
- Figur 6: ein Ausführungsbeispiel für ein Wechselrichtermodul,
- Figur 7: ein weiteres Ausführungsbeispiel für ein Wechselrichtermodul,
- Figur 8: ein Ausführungsbeispiel für ein Kondensatormodul,
- Figur 9: ein Ausführungsbeispiel für ein Gleichrichtermodul,
- Figur 10: ein weiteres Ausführungsbeispiel für eine erfindungsgemäße Umrichteranordnung mit einem Ausführungsbeispiel für einen erfindungsgemäßen Umrichter,
- Figur 11: ein drittes Ausführungsbeispiel für eine erfindungsgemäße Umrichteranordnung mit einem Ausführungsbeispiel für einen erfindungsgemäßen Umrichter und
- Figur 12: ein weiteres Ausführungsbeispiel für einen erfindungsgemäßen Umrichter.

In den Figuren werden der Übersicht halber für identische oder vergleichbare Komponenten stets dieselben Bezugszeichen verwendet.

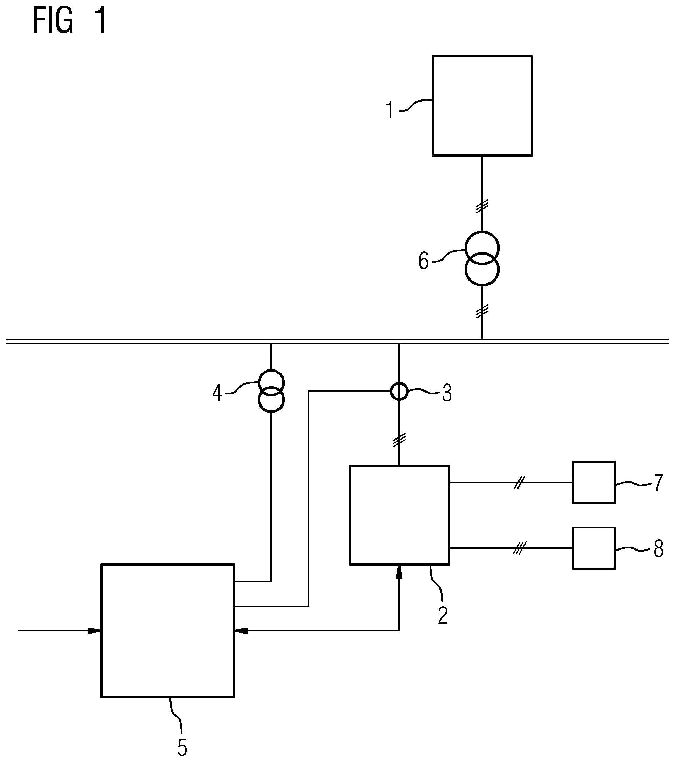

Die Figur 1 zeigt eine Anordnung mit einem Ausführungsbeispiel für einen erfindungsgemäßen Umrichter 2, der über einen Transformator 6 an ein elektrisches Energieversorgungsnetz 1 angeschlossen ist. Es werden der Strom durch den Umrichter 2 mittels einer Strommesseinrichtung 3 und die Anschlussspannung am Umrichter 2 mittels einer Spannungsmesseinrichtung 4 gemessen. Die Messwerte werden von einer Umrichteransteuereinheit 5 verarbeitet, die den Umrichter 2 kontrolliert und ansteuert. An den Umrichter 2 können beispielsweise eine einphasige Last 7 und/oder eine Drehstromlast 8 angeschlossen werden. Bei dem Umrichter 2 handelt es sich vorzugsweise um einen Multilevelumrichter.

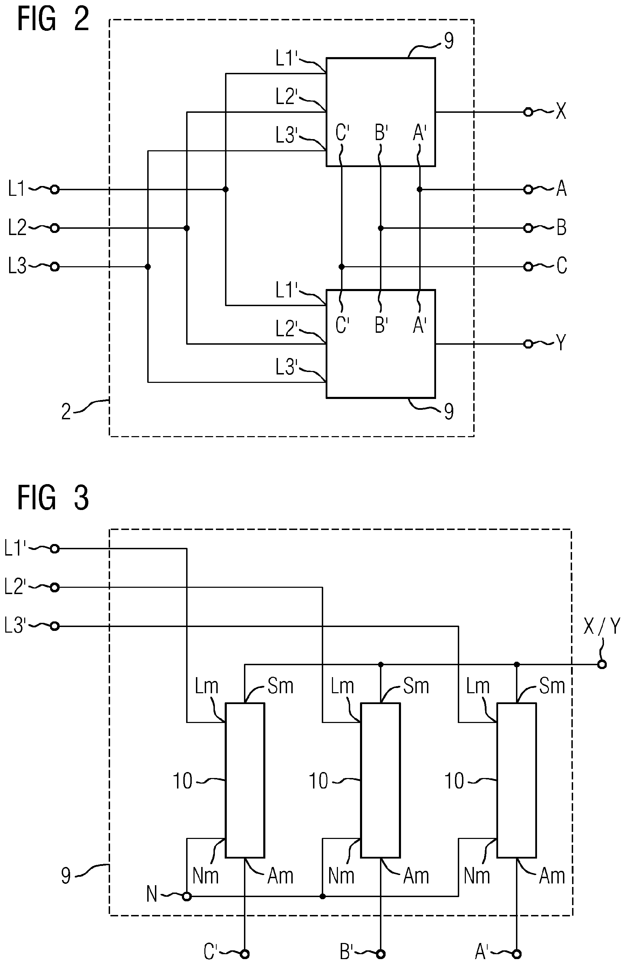

Die Figur 2 zeigt ein Ausführungsbeispiel für den Umrichter 2 gemäß Figur 1 näher im Detail. Der Umrichter 2 umfasst einen ersten Teilkonverter und einen zweiten Teilkonverter. Die beiden Teilkonverter, die in den Figuren mit Bezugszeichen 9 gekennzeichnet sind, sind vorzugsweise baugleich und umfassen jeweils teilkonvertereigene Einspeisedrehstromanschlüsse L1', L2', L3' zum Anschluss an ein einspeisendes elektrisches Drehstromsystem, teilkonvertereigene Ausgabedrehstromanschlüsse A', B', C', die ein teilkonvertereigenes Ausgabedrehstromsystem bilden, und einen teilkonvertereigenen Sternpunktanschluss X bzw. Y zum Kontaktieren eines Sternpunkts des teilkonvertereigenen Ausgabedrehstromsystems.

Die beiden Teilkonverter 9 sind bezüglich ihrer teilkonvertereigenen Einspeisedrehstromanschlüsse L1', L2', L3' parallelgeschaltet. Die parallelgeschalteten teilkonvertereigenen Einspeisedrehstromanschlüsse L1', L2', L3' bilden umrichtereigene Einspeisedrehstromanschlüsse L1, L2, L3 zum Anschluss an ein und dasselbe speisende Drehstromsystem.

Die Teilkonverter 9 sind außerdem bezüglich ihrer teilkonvertereigenen Ausgabedrehstromanschlüsse A', B', C' parallelgeschaltet. Bei der Ausführungsvariante gemäß Figur 2 bilden die teilkonvertereigenen Ausgabedrehstromanschlüsse A', B', C' umrichtereigene Ausgabedrehstromanschlüsse A, B, C, die nach außen geführt sind und von außen zugänglich sind. Die umrichtereigenen Ausgabedrehstromanschlüsse A, B, C gemäß der Figur 2 können somit auch als extern zugängliche, umrichtereigene Ausgabedrehstromanschlüsse A, B, C bezeichnet werden.

Die teilkonvertereigenen Sternpunktanschlüsse X und Y ermöglichen je nach Ansteuerung der Teilkonverter 9 durch die Umrichteransteuereinheit 5 gemäß der Figur 1 eine Ausgabe einer Gleichspannung oder einer einphasigen Wechselspannung. Die Frequenz der einphasigen Wechselspannung ist von der Ansteuerung des Umrichters 2 durch die Umrichteransteuereinheit 5 abhängig und in einem weiten Bereich beliebig von außen einstellbar.

Entsprechendes gilt für die an den umrichtereigenen Ausgabedrehstromanschlüssen A, B, C ausgegebene Drehspannung, deren Frequenz ebenfalls von der Ansteuerung des Umrichters durch die Umrichteransteuereinheit 5 abhängig ist und somit ebenfalls in einem weiten Bereich beliebig von außen einstellbar ist. Die Frequenz der Drehspannung kann sich von der Frequenz der einphasigen Wechselspannung an den Sternpunktanschlüssen X und Y sowie von der Frequenz der Einspeisedrehspannung des speisenden Drehstromsystems an den umrichtereigenen Einspeisedrehstromanschlüssen L1, L2, L3 unterscheiden.

Die Figur 3 zeigt ein Ausführungsbeispiel für den Teilkonverter 9 gemäß Figur 2. Der Teilkonverter 9 weist jeweils pro teilkonvertereigenem Einspeisedrehstromanschluss L1', L2', L3' ein Konvertermodul 10 auf. Jedes der Konvertermodule 10 umfasst jeweils einen modulseitigen Einspeisedrehstromanschluss Lm, einen modulseitigen Neutralleiteranschluss Nm, einen modulseitigen Ausgabedrehstromanschluss Am und einen modulseitigen Sternpunktanschluss Sm. Die modulseitigen Neutralleiteranschlüsse Nm der Konvertermodule 10 sind miteinander verbunden und bilden einen teilkonvertereigenen Neutralleiteranschluss N des Teilkonverters 9.

Die modulseitigen Sternpunktanschlüsse Sm der Konvertermodule 10 sind miteinander verbunden und bilden den teilkonvertereigenen Sternpunktanschluss X bzw. Y des Teilkonverters 9. Die modulseitigen Einspeisedrehstromanschlüsse Lm bilden jeweils einen der teilkonvertereigenen Einspeisedrehstromanschlüsse L1', L2', L3' des Teilkonverters 9. Die modulseitigen Ausgabedrehstromanschlüsse Am bilden jeweils einen der teilkonvertereigenen Ausgabedrehstromanschlüsse A', B', C' des Teilkonverters 9.

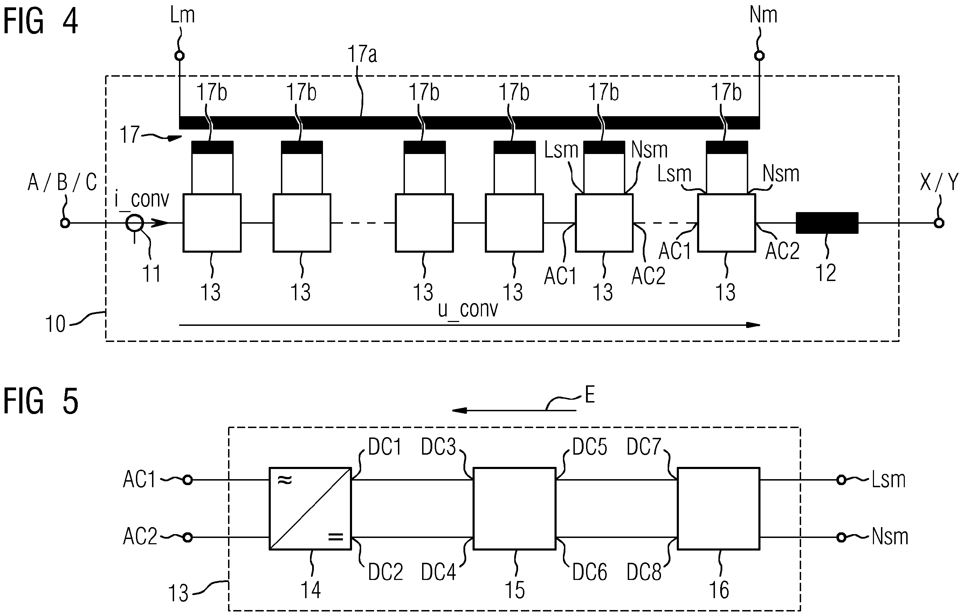

Die Figur 4 zeigt ein Ausführungsbeispiel für das Konvertermodul 10 gemäß Figur 3. Das Konvertermodul 10 weist zwei oder mehr elektrisch in Reihe geschaltete Submodule 13, einen Transformator 17 mit einer Primärwicklung 17a und pro Submodul 13 jeweils einer Sekundärwicklung 17b auf. Jedes der Submodule 13 ist eingangsseitig jeweils individuell mit einer der Sekundärwicklungen 17b des Transformators 17 verbunden.

Einer der Anschlüsse der Primärwicklung 17a des Transformators 17 bildet einen modulseitigen Einspeisedrehstromanschluss Lm und der andere Anschluss der Primärwicklung 17a einen modulseitigen Neutralleiteranschluss Nm.

In Reihe mit den Submodulen 13 liegt außerdem eine Koppelinduktivität 12 und eine Strommesseinrichtung 11, die den Strom i_conv durch das Konvertermodul 10 misst und den Strommesswert vorzugsweise zu der Umrichteransteuereinheit 5 gemäß Figur 1 übermittelt. [PM(TTRVC1]

Die Figur 5 zeigt ein Ausführungsbeispiel für das Submodul 13 gemäß Figur 4.

Das Submodul 13 weist ein Gleichrichtermodul 16 auf, das mit einer dem Submodul 13 zugeordneten Sekundärwicklung 17b des Transformators 17 verbunden ist und von der Sekundärwicklung 17b gespeist wird; hierzu dienen die Anschlüsse Lsm und Nsm des Submoduls 13.

Das Submodul 13 weist außerdem ein dem Gleichrichtermodul 16 - in Energieflussrichtung bzw. Energiespeiserichtung E gesehen - nachgeordnetes Kondensatormodul 15 und ein dem Kondensatormodul 15 - in Energieflussrichtung E gesehen - nachgeordnetes Wechselrichtermodul 14 auf. Die in der Figur 4 gezeigte elektrische Reihenschaltung der Submodule 13 beruht auf der kaskadierten Verschaltung der Wechselspannungsanschlüsse AC1 und AC2 der Wechselrichtermodule 14. Die innen liegenden Anschlüsse des Gleichrichtermoduls 16, des Kondensatormoduls 15 und des Wechselrichtermoduls 14 sind in der Figur 5 mit den Bezugszeichen DC7 und DC8 (für das Gleichrichtermodul 16), DC3 und DC4 bzw. DC5 und DC6 (für das Kondensatormodul 15) und DC1 und DC2 (für das Wechselrichtermodul 14) bezeichnet.

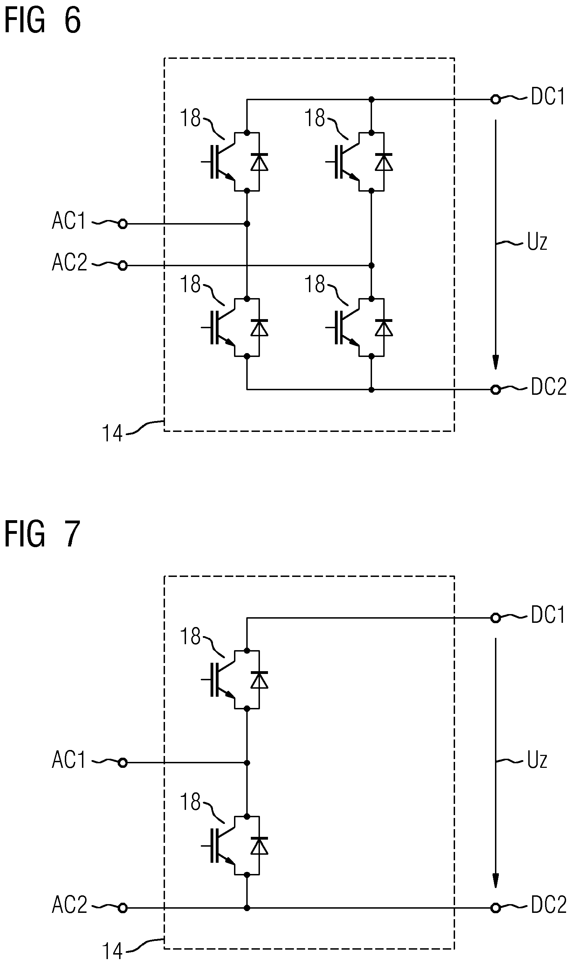

Die Figur 6 zeigt ein Ausführungsbeispiel für ein Wechselrichtermodul 14 gemäß Figur 5. Das Wechselrichtermodul 14 wird durch ein H-Brückenmodul bestehend aus vier Halbleiterschaltern 18 gebildet. Geeignete Halbleiterschalter 18 sind z. B. IGBT, IGCT, IEGT oder MOSFET.

Die Figur 7 zeigt ein weiteres Ausführungsbeispiel für ein Wechselrichtermodul 14 gemäß Figur 5. Das Wechselrichtermodul 14 gemäß Figur 7 wird durch ein Halbbrückenmodul bestehend aus zwei Halbleiterschaltern 18 gebildet. Geeignete Halbleiterschalter 18 sind z. B. IGBT, IGCT, IEGT oder MOSFET.

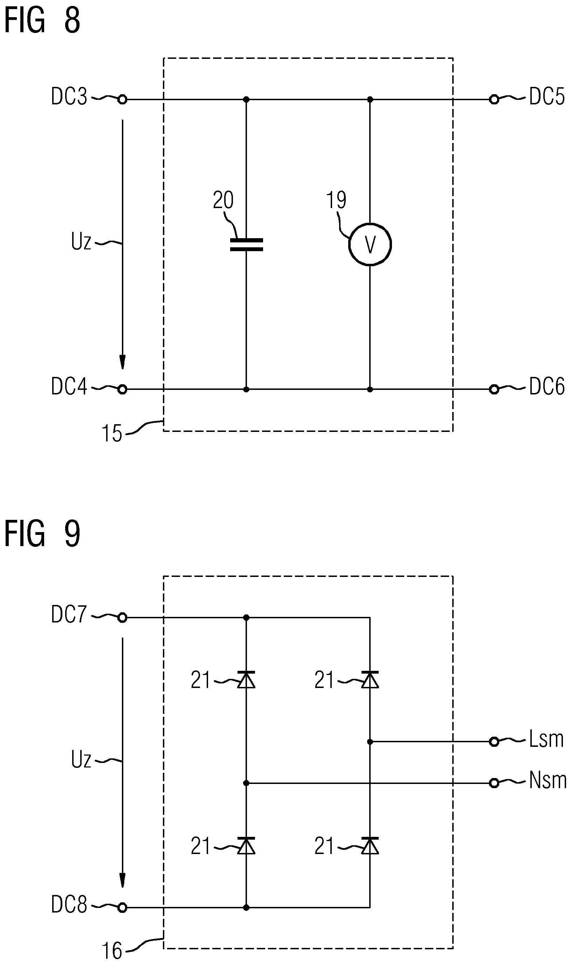

Die Figur 8 zeigt ein Ausführungsbeispiel für das Kondensatormodul 15 gemäß Figur 5. Das Kondensatormodul 15 besteht aus einem Kondensator 20, der eine Zwischenkreisspannung Uz puffert, und einer parallelgeschalteten Spannungsmesseinrichtung 19, die die Zwischenkreisspannung Uz misst und den Spannungsmesswert vorzugsweise zu der Umrichteransteuereinheit 5 gemäß Figur 1 übermittelt.

Die Figur 9 zeigt ein Ausführungsbeispiel für ein Gleichrichtermodul 16 gemäß Figur 5. Das Gleichrichtermodul 16 umfasst vier Dioden 21 zum Gleichrichten einer einphasigen Wechselspannung. Es kann alternativ auch ein dreiphasiger Brückengleichrichter verwendet werden.

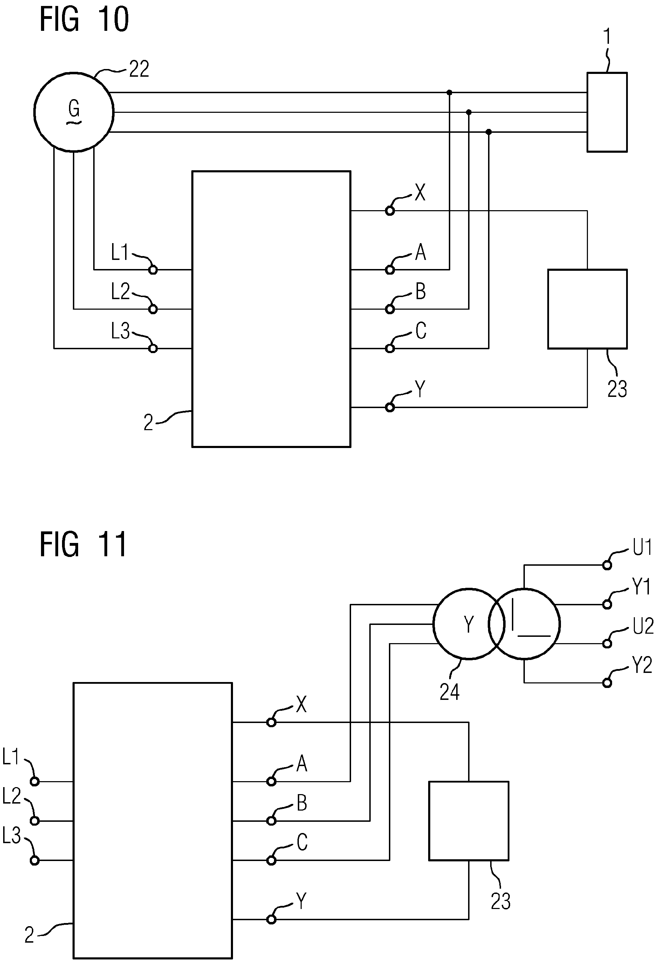

Die Figur 10 zeigt ein weiteres Ausführungsbeispiel für eine Anordnung mit dem Umrichter 2 gemäß Figur 2. Der Umrichter 2 dient zur Kopplung einer doppelt speisenden Asynchronmaschine 22 mit einem elektrischen Energieversorgungsnetz 1.

Die Asynchronmaschine 22 weist eine erste Drehstromwicklung, die an die umrichtereigenen Einspeisedrehstromanschlüsse L1, L2, L3 des Umrichters 2 angeschlossen ist, und eine zweite Drehstromwicklung auf, die gemeinsam (bzw. parallel zu dieser) mit den umrichtereigenen Ausgabedrehstromanschlüssen A, B, C des Umrichters 2 an das Netz 1 angeschlossen ist. An der ersten Drehstromwicklung erzeugt die Asynchronmaschine 22 vorzugsweise eine Drehspannung mit einer Frequenz von beispielsweise zwischen 5 bis 10 Hz; die zweite Drehstromwicklung der Asynchronmaschine 22 wird mit der Drehspannung des speisenden Netzes mit einer Frequenz von beispielsweise 50 Hz versorgt.

Der Umrichter 2 ist an seinen Sternpunktanschlüssen X und Y an einen Widerstand und/oder einen elektrischen Speicher 23 angeschlossen, die zur Aufnahme und/oder Speicherung von Generatorenergie und damit zur Stützung des elektrischen Energieversorgungsnetzes 1 bei Netzfehlern dienen können.

Die Figur 11 zeigt ein drittes Ausführungsbeispiel für eine Anordnung mit dem Umrichter 2 gemäß Figur 2. Mit Energie versorgt wird der Umrichter 2 an seinen umrichtereigenen Einspeisedrehstromanschlüssen L1, L2, L3, an die ein nicht weiter gezeigtes elektrisches Drehstromnetz angeschlossen ist.

Der Umrichter 2 dient zur Speisung beispielsweise eines elektrischen Eisenbahnnetzes und ist zum diesem Zweck mit seinen umrichtereigenen Ausgabedrehstromanschlüssen A, B, C an einen Drei-auf-Zwei-Einphasentransformator 24 angeschlossen. Bei dem Drei-auf-Zwei-Einphasentransformator 24 handelt es sich vorzugsweise um einen Scott- oder LeBlanc Transformator.

Der Drei-auf-Zwei-Einphasentransformator 24 weist ausgangsseitig Anschlüsse U1 und Y1 zur Ausgabe einer ersten Wechselspannung und U2 und Y2 zur Ausgabe einer zweiten Wechselspannung auf. Die erste und zweite Wechselspannung weisen vorzugsweise die gleiche Frequenz von beispielsweise 16 2/3 Hz auf, sind jedoch vorzugsweise um 90 Grad zueinander phasenverschoben.

Der Umrichter 2 ist an seinen Sternpunktanschlüssen X und Y an einen Widerstand und/oder einen elektrischen Speicher 23 angeschlossen, die zur Aufnahme und/oder Speicherung von Generatorenergie und damit zur Stützung der Bahnnetzseite bzw. des elektrischen Eisenbahnnetzes bei Netzfehlern dienen können.

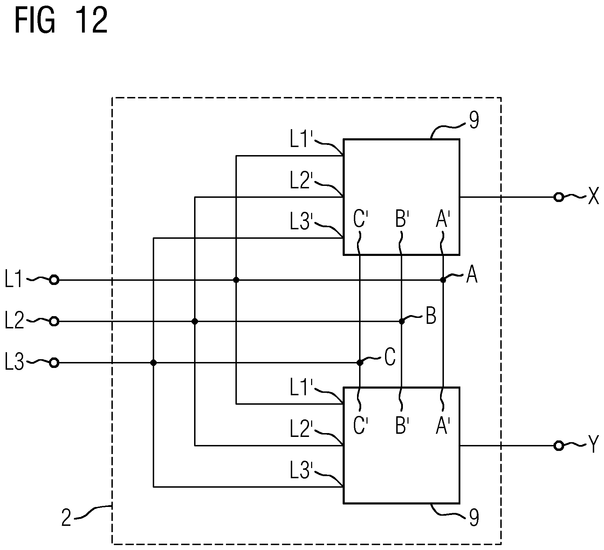

Die Figur 12 zeigt ein weiteres Ausführungsbeispiel für einen erfindungsgemäßen Umrichter 2 näher im Detail. Der Umrichter 2 gemäß Figur 12 umfasst einen ersten Teilkonverter und einen zweiten Teilkonverter und entspricht dem Unmrichter 2 gemäß der Figur 2 mit dem Unterschied, dass die parallelgeschalteten teilkonvertereigenen Ausgabedrehstromanschlüsse A', B', C' interne umrichtereigene Ausgabedrehstromanschlüsse A, B, C bilden, die mit den umrichtereigenen Einspeisedrehstromanschlüssen L1, L2, L3, also den ebenfalls parallelgeschalteten teilkonvertereigenen Einspeisedrehstromanschlüssen L1', L2', L3', verbunden sind.

Von außen zugänglich bzw. beschaltbar sind also die umrichtereigenen Einspeisedrehstromanschlüsse L1, L2, L3 und die teilkonvertereigenen Sternpunktanschlüsse X, Y, die eine Ausgabe einer Gleichspannung oder einer einphasigen Wechselspannung ermöglichen.

Die im Zusammenhang mit den Figuren 1 bis 12 beispielhaft beschriebenen Umrichter 2 können, je nach Beschaltung, eine Erzeugung einer Drehspannung sowie zusätzlich die Erzeugung einer Gleich- oder Wechselspannung aus einem eingangsseitigen Drehstromnetz ermöglichen, und zwar mit jeweils beliebiger Ausgangsfrequenz ohne einen gemeinsamen elektrischen Zwischenkreis.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichen:

- 1: elektrisches Energieversorgungsnetz
- 2: Umrichter
- 3: Strommesseinrichtung
- 4: Spannungsmesseinrichtung
- 5: Umrichteransteuereinheit
- 6: Transformator
- 7: Einphasige Last
- 8: Drehstromlast
- 9: Teilkonverter
- 10: Konvertermodul
- 11: Strommesseinrichtung
- 12: Koppelinduktivität
- 13: Submodul
- 14: Wechselrichtermodul
- 15: Kondensatormodul
- 16: Gleichrichtermodul
- 17: Transformator
- 17a: Primärwicklung
- 17b: Sekundärwicklung
- 18: Halbleiterschalter
- 19: Spannungsmesseinrichtung
- 20: Kondensator
- 21: Diode
- 22: Doppelt gespeiste Asynchronmaschine
- 23: Elektrischer Speicher oder Widerstand
- 24: Drei-auf-Zwei-Einphasentransformator

- A: umrichtereigener Ausgabedrehstromanschluss
- A': teilkonvertereigener Ausgabedrehstromanschluss
- AC1: Wechselspannungsanschluss
- AC2: Wechselspannungsanschlusss
- Am: modulseitiger Ausgabedrehstromanschluss
- B: umrichtereigener Ausgabedrehstromanschluss
- B': teilkonvertereigener Ausgabedrehstromanschluss
- C: umrichtereigener Ausgabedrehstromanschluss
- C': teilkonvertereigener Ausgabedrehstromanschluss
- DC1: innenliegender Anschluss des Wechselrichtermoduls
- DC2: innenliegender Anschluss des Wechselrichtermoduls
- DC3: innenliegender Anschluss des Kondensatormoduls
- DC4: innenliegender Anschluss des Kondensatormoduls
- DC5: innenliegender Anschluss des Kondensatormoduls
- DC6: innenliegender Anschluss des Kondensatormoduls
- DC7: innenliegender Anschluss des Gleichrichtermoduls
- DC8: innenliegender Anschluss des Gleichrichtermoduls
- E: Energiespeiserichtung
- i_conv: Strom
- L1: umrichtereigener Einspeisedrehstromanschluss
- L1': teilkonvertereigener Einspeisedrehstromanschluss
- L2: umrichtereigener Einspeisedrehstromanschluss
- L2': teilkonvertereigener Einspeisedrehstromanschluss
- L3: umrichtereigener Einspeisedrehstromanschluss
- L3': teilkonvertereigener Einspeisedrehstromanschluss
- Lm: modulseitiger Einspeisedrehstromanschluss
- Lsm: Anschluss
- N: teilkonvertereigener Neutralleiteranschluss
- Nm: modulseitiger Neutralleiteranschluss
- Nsm: Anschluss
- Sm: modulseitiger Sternpunktanschluss
- U1: ausgangsseitiger Anschluss
- U2: ausgangsseitiger Anschluss
- u_conv: Spannung
- Uz: Zwischenkreisspannung
- X: teilkonvertereigener Sternpunktanschluss
- Y: teilkonvertereigener Sternpunktanschluss
- Y1: ausgangsseitiger Anschluss
- Y2: ausgangsseitiger Anschluss

## Patentansprüche

1. Umrichter (2) mit einem Teilkonverter (9), der aufweist:
- teilkonvertereigene Einspeisedrehstromanschlüsse (L1', L2', L3') zum Anschluss an ein einspeisendes elektrisches Drehstromsystem sowie
- teilkonvertereigene Ausgabedrehstromanschlüsse (A', B', C'), die ein teilkonvertereigenes Ausgabedrehstromsystem bilden, und
- einen teilkonvertereigenen Sternpunktanschluss (X) zum Kontaktieren eines Sternpunkts des teilkonvertereigenen Ausgabedrehstromsystems,
- wobei der Umrichter (2) zumindest einen weiteren Teilkonverter (9) umfasst, der teilkonvertereigene Einspeisedrehstromanschlüsse (L1', L2', L3'), teilkonvertereigene Ausgabedrehstromanschlüsse (A', B', C'), die ein teilkonvertereigenes Ausgabedrehstromsystem bilden, und einen teilkonvertereigenen Sternpunktanschluss (Y) zum Kontaktieren eines Sternpunkts des teilkonvertereigenen Ausgabedrehstromsystems aufweist, und
- wobei die teilkonvertereigenen Sternpunktanschlüsse (X, Y) eine Ausgabe einer Gleichspannung oder einer einphasigen Wechselspannung ermöglichen,
- wobei die Teilkonverter bezüglich ihrer teilkonvertereigenen Ausgabedrehstromanschlüsse (A', B', C') parallelgeschaltet sind, und
- wobei der eine (9) und der weitere Teilkonverter (9) jeweils pro teilkonvertereigenem Einspeisedrehstromanschluss (L1', L2', L3') jeweils ein Konvertermodul (10) aufweisen,
- wobei jedes der Konvertermodule (10) jeweils einen modulseitigen Einspeisedrehstromanschluss (Lm), einen modulseitigen Ausgabedrehstromanschluss (Am) und einen modulseitigen Sternpunktanschluss (Sm) aufweist,
- wobei die Konvertermodule (10) jeweils zwei oder mehr elektrisch in Reihe geschaltete Submodule (13) aufweisen,
- wobei die modulseitigen Sternpunktanschlüsse (Sm) der Konvertermodule (10) miteinander verbunden sind und den teilkonvertereigenen Sternpunktanschluss (X, Y) des jeweiligen Teilkonverters (9) bilden, und
- wobei die modulseitigen Ausgabedrehstromanschlüsse (A', B', C') jeweils einen der teilkonvertereigenen Ausgabedrehstromanschlüsse (A', B', C') des jeweiligen Teilkonverters (9) bilden,
**dadurch gekennzeichnett,** dass
- die Teilkonverter (9) bezüglich ihrer teilkonvertereigenen Einspeisedrehstromanschlüsse (L1', L2', L3') parallelgeschaltet sind und die parallelgeschalteten teilkonvertereigenen Einspeisedrehstromanschlüsse (L1', L2', L3') umrichtereigene Einspeisedrehstromanschlüsse (L1, L2, L3) zum Anschluss an ein und dasselbe speisende Drehstromsystem bilden,
- wobei jedes der Konvertermodule (10) jeweils einen modulseitigen Neutralleiteranschluss (Nm) aufweist,
- wobei die modulseitigen Neutralleiteranschlüsse der Konvertermodule (10) miteinander verbunden sind und einen teilkonvertereigenen Neutralleiteranschluss des jeweiligen Teilkonverters (9) bilden,
- wobei die modulseitigen Einspeisedrehstromanschlüsse jeweils einen der teilkonvertereigenen Einspeisedrehstromanschlüsse (L1', L2', L3') des jeweiligen Teilkonverters (9) bilden,
- wobei die Konvertermodule (10) jeweils einen Transformator (17) mit einer Primärwicklung (17a) und pro Submodul (13) jeweils einer Sekundärwicklung (17b) aufweisen,
- wobei jedes der Submodule (13) eingangsseitig jeweils individuell mit einer der Sekundärwicklungen des Transformators verbunden ist,
- wobei einer der Anschlüsse der Primärwicklung des Transformators einen modulseitigen Einspeisedrehstromanschluss und
- wobei ein anderer Anschluss der Primärwicklung des Transformators einen modulseitigen Neutralleiteranschluss bildet.

2. Umrichter (2) nach Anspruch 1,
**dadurch gekennzeichnet, dass**
die Submodule (13) jeweils ein Gleichrichtermodul (16), das mit einer dem Submodul (13) zugeordneten Sekundärwicklung des Transformators verbunden ist, ein dem Gleichrichtermodul (16) nachgeordnetes Kondensatormodul (15) und ein dem Kondensatormodul (15) nachgeordnetes Wechselrichtermodul (14) aufweist.

3. Umrichter (2) nach einem der voranstehenden Ansprüche,
**dadurch gekennzeichnet, dass**
die elektrische Reihenschaltung der Submodule (13) auf der kaskadierten Verschaltung der Wechselspannungsanschlüsse (AC1, AC2) der Wechselrichtermodule (14) beruht.

4. Umrichteranordnung,
**dadurch gekennzeichnet, dass**
diese mit zumindest einem Umrichter (2) nach einem der voranstehenden Ansprüche ausgestattet ist.

5. Umrichteranordnung nach Anspruch 4,
**dadurch gekennzeichnet, dass**
- die parallelgeschalten teilkonvertereigenen Ausgabedrehstromanschlüsse (A', B', C') umrichtereigene Ausgabedrehstromanschlüsse (A, B, C) bilden und
- an die umrichtereigenen Ausgabedrehstromanschlüsse (A, B, C) die Primärseite eines Drei-Auf-Zwei-Einphasentransformators (24) angeschlossen ist.

6. Umrichteranordnung nach einem der voranstehenden Ansprüche 4 bis 5,
**dadurch gekennzeichnet, dass**
- die parallelgeschalten teilkonvertereigenen Ausgabedrehstromanschlüsse (A', B', C') umrichtereigene Ausgabedrehstromanschlüsse (A, B, C) bilden und
- die umrichtereigenen Ausgabedrehstromanschlüsse (A, B, C) an die Primärseite eines Transformator (24) angeschlossen sind, der dazu geeignet ist, auf seiner Sekundärseite zwei Wechselspannungen mit einem Phasenversatz von 90 Grad auszugeben.

7. Umrichteranordnung nach einem der voranstehenden Ansprüche 4 bis 6,
**dadurch gekennzeichnet, dass**
zwischen dem teilkonvertereigenen Sternpunktanschluss (X) des einen Teilkonverters (9) und dem teilkonvertereigenen Sternpunktanschluss (Y) des zumindest einen weiteren Teilkonverters (9) ein elektrischer Speicher (23) angeschlossen ist.

8. Umrichteranordnung nach einem der voranstehenden Ansprüche 4 bis 7,
**dadurch gekennzeichnet, dass**
zwischen dem teilkonvertereigenen Sternpunktanschluss (X) des einen Teilkonverters (9) und dem teilkonvertereigenen Sternpunktanschluss (Y) des zumindest einen weiteren Teilkonverters (9) ein elektrischer Verbraucher (23) angeschlossen ist.

9. Umrichteranordnung nach einem der voranstehenden Ansprüche 4 bis 8,
**dadurch gekennzeichnet, dass**
- die Umrichteranordnung einen Generator, insbesondere eine Asynchronmaschine (22), umfasst, die zumindest zwei generatorseitige Ausgangsdrehstromsysteme zur Verfügung stellt,
- eines der generatorseitigen Ausgangsdrehstromsysteme mit den umrichtereigenen Einspeisedrehstromanschlüssen (L1, L2, L3) verbunden ist und
- ein anderes generatorseitiges Ausgangsdrehstromsystem mit den umrichtereigenen Ausgabedrehstromanschlüssen (A, B, C) verbunden ist.

10. Umrichteranordnung nach einem der voranstehenden Ansprüche 4 bis 9,
**dadurch gekennzeichnet, dass**
- die parallelgeschalteten teilkonvertereigenen Ausgabedrehstromanschlüsse (A', B', C') interne umrichtereigene Ausgabedrehstromanschlüsse (A, B, C) bilden und
- jeder der umrichtereigenen Einspeisedrehstromanschlüsse (L1, L2, L3) jeweils mit einem der internen umrichtereigenen Ausgabedrehstromanschlüsse (A, B, C) elektrisch verbunden ist.

## Claims

1. Converter (2) having a partial converter (9), which has:
- partial-converter-specific three-phase supply connections (L1', L2', L3') for connection to a supplying electrical three-phase system, and
- partial-converter-specific three-phase output connections (A', B', C') that form a partial-converter-specific three-phase output system, and
- a partial-converter-specific star point connection (X) for making contact with a star point of the partial-converter-specific three-phase output system,
- wherein the converter (2) comprises at least one further partial converter (9) that has partial-converter-specific three-phase supply connections (L1', L2', L3'), partial-converter-specific three-phase output connections (A', B', C') that form a partial-converter-specific three-phase output system, and a partial-converter-specific star point connection (Y) for making contact with a star point of the partial-converter-specific three-phase output system, and
- wherein the partial-converter-specific star point connections (X, Y) allow a DC voltage or a single-phase AC voltage to be output,
- wherein the partial-converter-specific three-phase output connections (A', B', C') of the partial converters are connected in parallel, and
- wherein the one partial converter (9) and the further partial converter (9) each have a converter module (10) for each partial-converter-specific three-phase supply connection (L1', L2', L3'),
- wherein each of the converter modules (10) respectively has a module-side three-phase supply connection (Lm), a module-side three-phase output connection (Am) and a module-side star point connection (Sm),
- wherein the converter modules (10) each have two or more submodules (13) that are electrically connected in series,
- wherein the module-side star point connections (Sm) of the converter modules (10) are connected to one another and form the partial-converter-specific star point connection (X, Y) of the respective partial converter (9), and
- wherein the module-side three-phase output connections (A', B', C') each form one of the partial-converter-specific three-phase output connections (A', B', C') of the respective partial converter (9),
**characterized in that**
- the partial-converter-specific three-phase supply connections (L1', L2', L3') of the partial converters (9) are connected in parallel and the partial-converter-specific three-phase supply connections (L1', L2', L3') connected in parallel form converter-specific three-phase supply connections (L1, L2, L3) for connection to one and the same supplying three-phase system,
- wherein each of the converter modules (10) respectively has a module-side neutral conductor connection (Nm),
- wherein the module-side neutral conductor connections of the converter modules (10) are connected to one another and form a partial-converter-specific neutral conductor connection of the respective partial converter (9),
- wherein the module-side three-phase supply connections each form one of the partial-converter-specific three-phase supply connections (L1', L2', L3') of the respective partial converter (9),
- wherein the converter modules (10) each have a transformer (17) having a primary winding (17a) and a respective secondary winding (17b) for each submodule (13),
- wherein each of the submodules (13) is connected, on the input side and in each case individually, to one of the secondary windings of the transformer,
- wherein one of the connections of the primary winding of the transformer forms a module-side three-phase supply connection and
- wherein another connection of the primary winding of the transformer forms a module-side neutral conductor connection.

2. Converter (2) according to Claim 1,
**characterized in that**
the submodules (13) each have a rectifier module (16) connected to a secondary winding of the transformer, the secondary winding being associated with the submodule (13), a capacitor module (15) arranged downstream of the rectifier module (16) and an inverter module (14) arranged downstream of the capacitor module (15).

3. Converter (2) according to either of the preceding claims,
**characterized in that**
the electrical series circuit of the submodules (13) is based on the cascaded interconnection of the AC voltage connections (AC1, AC2) of the inverter modules (14).

4. Converter arrangement,
**characterized in that**
it is equipped with at least one converter (2) according to one of the preceding claims.

5. Converter arrangement according to Claim 4,
**characterized in that**
- the partial-converter-specific three-phase output connections (A', B', C') connected in parallel form converter-specific three-phase output connections (A, B, C) and
- the primary side of a three-to-two single-phase transformer (24) is connected to the converter-specific three-phase output connections (A, B, C).

6. Converter arrangement according to either of the preceding Claims 4 and 5,
**characterized in that**
- the partial-converter-specific three-phase output connections (A', B', C') connected in parallel form converter-specific three-phase output connections (A, B, C), and
- the converter-specific three-phase output connections (A, B, C) are connected to the primary side of a transformer (24) that is suitable for outputting two AC voltages with a phase offset of 90 degrees on its secondary side.

7. Converter arrangement according to one of the preceding Claims 4 to 6,
**characterized in that**
an electrical store (23) is connected between the partial-converter-specific star point connection (X) of the one partial converter (9) and the partial-converter-specific star point connection (Y) of the at least one further partial converter (9).

8. Converter arrangement according to one of the preceding Claims 4 to 7,
**characterized in that**
an electrical load (23) is connected between the partial-converter-specific star point connection (X) of the one partial converter (9) and the partial-converter-specific star point connection (Y) of the at least one further partial converter (9).

9. Converter arrangement according to one of the preceding Claims 4 to 8,
**characterized in that**
- the converter arrangement comprises a generator, in particular an asynchronous machine (22) that provides at least two generator-side three-phase output systems,
- one of the generator-side three-phase output systems is connected to the converter-specific three-phase supply connections (L1, L2, L3), and
- another generator-side three-phase output system is connected to the converter-specific three-phase output connections (A, B, C).

10. Converter arrangement according to one of the preceding Claims 4 to 9,
**characterized in that**
- the partial-converter-specific three-phase output connections (A', B', C') connected in parallel form internal converter-specific three-phase output connections (A, B, C), and
- each of the converter-specific three-phase supply connections (L1, L2, L3) is electrically connected in each case to one of the internal converter-specific three-phase output connections (A, B, C).

## Revendications

1. Convertisseur (2) comprenant un convertisseur (9) partiel, qui a :
- des bornes (L1', L2', L3') triphasées d'alimentation propres au convertisseur partiel pour le raccordement à un système triphasé électrique d'alimentation ainsi que
- des bornes (A', B', C') triphasées de sortie propres au convertisseur partiel, qui forment un système triphasé de sortie propres au convertisseur partiel, et
- une borne (X) de point neutre propre au convertisseur partiel pour la mise en contact d'un point neutre du système triphasé de sortie propres au convertisseur partiel,
- dans lequel le convertisseur (2) a au moins un autre convertisseur (9) partiel, qui forme des bornes (L1', L2', L3') triphasées d'alimentation propres au convertisseur partiel, des bornes (A', B', C') triphasées de sortie propres au convertisseur partiel, qui forment le système triphasé de sortie propre au convertisseur partiel, et une borne (Y) de point neutre propre au convertisseur partiel pour la mise en contact d'un point neutre du système triphasé de sortie propre au convertisseur partiel, et
- dans lequel les bornes (X, Y) de point neutre propres à un convertisseur partiel rendent possible une sortie d'une tension continue ou d'une tension alternative monophasée,
- dans lequel les convertisseurs partiels sont montés en parallèle en ce qui concerne leurs bornes (A', B', C') triphasées de sortie propres à un convertisseur partiel, et
- dans lequel l'un (9) et l'autre convertisseur (9) partiel ont chacun par borne (L1', L2', L3') triphasée d'alimentation propre à un convertisseur partiel respectivement un module (10) de convertisseur,
- dans lequel chacun des modules (10) de convertisseur a respectivement une borne (Lm) triphasée d'alimentation du côté du module, une borne (Am) triphasée de sortie du côté du module et une borne (Sm) de point neutre du côté du module,
- dans lequel les modules (10) de convertisseur ont chacun deux ou plusieurs sous-modules (13) montés électriquement en série,
- dans lequel les bornes (Sm) de point neutre du côté du module des modules (10) de convertisseur sont reliées entre elles et forment la borne (X, Y) de point neutre propres à un convertisseur partiel du convertisseur (9) partiel respectif, et
- dans lequel les bornes (A', B', C') triphasées de sortie du côté du module forment respectivement l'une des bornes (A', B', C') triphasées de sortie propres à un convertisseur partiel du convertisseur (9) partiel respectif,
**caractérisé en ce que**
- les convertisseurs (9) partiels sont montés en parallèle en ce qui concerne leurs bornes (L1', L2', L3') triphasées d'alimentation propres à un convertisseur partiel et les bornes (L1', L2', L3') triphasées d'alimentation propres à un convertisseur partiel montées en parallèle forment des bornes (L1, L2, L3) triphasées d'alimentation propres au convertisseur pour la connexion à un seul et même système triphasé d'alimentation,
- dans lequel chacun des modules (10) de convertisseur a une borne (Nm) de conducteur neutre du côté du module,
- dans lequel les bornes de conducteur neutre du côté du module des modules (10) du convertisseur sont reliées entre elles et forment une borne de conducteur neutre, propres à un convertisseur partiel, du convertisseur (9) partiel respectif,
- dans lequel les bornes triphasées d'alimentation du côté du module forment chacune l'une des bornes (L1', L2', L3') triphasées d'alimentation propres à un convertisseur partiel du convertisseur (9) partiel respectif,
- dans lequel les modules (10) de convertisseur ont chacun un transformateur (17) ayant un enroulement (17a) primaire et par sous-module (13) respectivement un enroulement (17b) secondaire,
- dans lequel chacun des sous-modules (13) est connecté du côté de l'entrée respectivement individuellement à l'un des enroulements secondaires du transformateur,
- dans lequel l'une des bornes de l'enroulement primaire du transformateur forme une borne triphasée d'alimentation du côté du module et
- dans lequel une autre borne de l'enroulement primaire du transformateur forme une borne de conducteur neutre du côté du module.

2. Convertisseur (2) suivant la revendication 1,
**caractérisé en ce que**
les sous-modules (13) ont chacun un module (7) de redresseur, qui est connecté à un enroulement secondaire, associé au sous-module (13), du transformateur, un module (15) de condensateur, monté en aval du module (16) de redresseur, et un module (14) d'onduleur, monté en aval du module (15) de condensateur.

3. Convertisseur (2) suivant l'une des revendications précédentes,
**caractérisé en ce que**
le montage en série électrique des sous-modules (13) repose sur le montage en cascade des bornes (AC1, AC2) de tension alternative des modules (14) d'onduleur.

4. Système de convertisseur,
**caractérisé en ce que**
celui-ci est équipé d'au moins un convertisseur (2) suivant l'une des revendications précédentes.

5. Système de convertisseur suivant la revendication 4, **caractérisé en ce que**
- les bornes (A', B', C') triphasées de sortie montées en parallèle propres à un convertisseur partiel forment des bornes (A, B, C) triphasées de sortie propres au convertisseur et
- le côté primaire d'un transformateur (24) monophasé trois sur deux est connecté aux bornes (A, B, C) triphasées de sortie propres au convertisseur.

6. Système de convertisseur suivant l'une des revendications 4 à 5 précédentes,
**caractérisé en ce que**
- les bornes (A', B', C') triphasées de sortie montées en parallèle propres à un convertisseur partiel forment des bornes (A, B, C) triphasées de sortie propres au convertisseur et
- les bornes (A, B, C) triphasées de sortie propres à un convertisseur sont connectées au côté primaire d'un transformateur (24) qui sont propres à donner sur son côté secondaire deux tensions alternatives ayant un déphasage de 90 degrés.

7. Système de convertisseur suivant l'une des revendications 4 à 6 précédentes,
**caractérisé en ce que**
un accumulateur (23) électrique est connecté entre la borne (X) de point neutre propre à un convertisseur partiel du un convertisseur (9) partiel et la borne (Y) de point neutre propre à un convertisseur partiel du au moins un autre convertisseur (9) partiel.

8. Système de convertisseur suivant l'une des revendications 4 à 7 précédentes,
**caractérisé en ce que**
un consommateur (23) électrique est connecté entre la borne (X) de point neutre propre à un convertisseur partiel du un convertisseur (9) partiel et la borne (Y) de point neutre propre à un convertisseur partiel du au moins un autre convertisseur (9) partiel.

9. Système de convertisseur suivant l'une des revendications 4 à 8 précédentes,
**caractérisé en ce que**
- le système de convertisseur comprend un générateur, notamment une machine (22) asynchrone, qui met à disposition au moins deux systèmes triphasés de sortie du côté du générateur,
- l'un des systèmes triphasés de sortie du côté du générateur est connecté aux bornes (L1, L2, L3) triphasées d'alimentation propres au convertisseur et
- un autre système triphasé de sortie du côté du générateur est connecté aux bornes (A, B, C) triphasées de sortie propres au convertisseur.

10. Système de convertisseur suivant l'une des revendications 4 à 9 précédentes,
**caractérisé en ce que**
- les bornes (A', B', C') triphasées de sortie montées en parallèle propres à un convertisseur partiel forment des bornes (A, B, C) triphasées de sortie interne propres au convertisseur et
- chacune des bornes (L1, L2, L3) triphasées d'alimentation propres au convertisseur est reliée électriquement respectivement à l'une des bornes (A, B, C) triphasées de sortie interne propres au convertisseur.
